Europäisches Patentamt
European Patent Office
Office européen des brevets

(19) (11) Publication number: **0 275 917 A2**

(12) **EUROPEAN PATENT APPLICATION**

(21) Application number: **88100386.7**

(22) Date of filing: **13.01.88**

(51) Int. Cl.4: **C08G 69/16** , C08L 77/02 , C08K 7/02 , C08K 7/16

(30) Priority: **14.01.87 JP 6617/87**

(43) Date of publication of application: **27.07.88 Bulletin 88/30**

(84) Designated Contracting States: **DE FR GB**

(71) Applicant: **Matsushita Electric Industrial Co., Ltd.**
**1006, Oaza Kadoma**
**Kadoma-shi Osaka-fu, 571(JP)**

(72) Inventor: **Suetsugu, Kenichiro**
**21-12-203, Minamimukonoso-4-chome**
**Amagasaki-shi(JP)**
Inventor: **Miyazaki, Masamitsu**
**15-10, Ohashicho**
**Kadoma-shi(JP)**

(74) Representative: **Patentanwälte Leinweber & Zimmermann**
**Rosental 7/II Aufg.**
**D-8000 München 2(DE)**

(54) **Low water-absorptive nylon rim material and process for producing molded product using said material.**

(57) A molded product of good dimensional stability can be produced by using a low water-absorptive nylon RIM material wherein 30 to 90% by weight of a lactam and 70 to 10% by weight of an olefinic polyhydric alcohol of branched structure having a molecular weight of 1,000 to 10,000 are blended in the presence of an activator represented by the following structural formula:

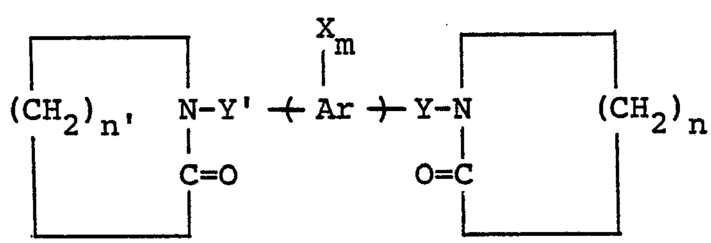

wherein Ar is a divalent aromatic residue, X is a halogen atom directly bonded to the aromatic ring, m is an integer of 1 to 6, Y and Y′ represent each an acyl group selected from

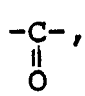 , 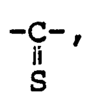 , 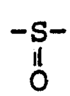 and 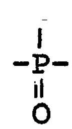 ,

EP 0 275 917 A2

Xerox Copy Centre

and n and n′ mean each an integer of 3 to 11, and optionally 10 to 50% by weight in total, based on the blend, of a fibrous or flaky filler having an average aspect ratio of 5 to 15 and a spherical filler having an average aspect ratio of 1 to 3 are mixed with the blend.

# LOW WATER-ABSORPTIVE NYLON RIM MATERIAL AND PROCESS FOR PRODUCING MOLDED PRODUCT USING SAID MATERIAL

The present invention relates to a modified nylon RIM material for use in producing various kinds of resin molded products in a small quantity and a process for producing a molded product using said RIM material.

Heretofore, urethane RIM materials (RIM stands for reaction injection molding) and epoxy RIM materials have been mainly used in producing various kinds of resin molded products in a small quantity. However, the urethane RIM materials have low heat resistance (they cause heat deformation at 70° to 80°C) and the epoxy RIM materials have low impact resistance (their notched Izod impact strengths are 10 kg-cm/cm or below). Hence, nylon RIM materials have been investigated as their substitute. The nylon RIM materials have high bending modulus (at least 20,000 kg/cm$^2$) and have a good balance between impact resistance (notched Izod impact strength of at least 10 kg-cm/cm) and heat deformation temperature (at least 120°C at a 18.6 kg load), and furthermore they are liquid and have a low viscosity and accordingly can be molded even in a non-metallic mold. Therefore, the nylon RIM materials have been used in production of an article on an experimental basis as one of various articles to be produced in a small quantity. Now that the nylon RIM for production of such an experimental article has been put into practical application, a technique is under investigation for enabling small quantity production of various kinds of products using a nylon RIM material.

The nylon RIM materials used heretofore, however, cause reduction in properties, change in dimension, etc. with the lapse of time, because the polyamide group as a constituent of the nylon RIM material is water-absorptive inherently. Currently, the water absorptivity of these materials is 20% by weight when it reaches an equilibrium in the atmosphere, and the change in dimension due to water absorption is 0.18%. This makes it difficult to use the nylon RIM materials in production of actual products, and accordingly the utilization of the nylon RIM materials in production of practical products has not been realized yet.

The main objects of the present invention are to provide a modified nylon RIM material of low water absorptivity and small dimensional change due to water absorption and a process for producing a molded product using said RIM material.

In order to solve the above-mentioned problems of the conventional nylon RIM materials, the present invention provides a low water-absorptive nylon RIM material wherein 30 to 90% by weight of a lactam and 70 to 10% by weight of an olefinic polyhydric alcohol of branched structure having a molecular weight of 1,000 to 10,000 are incorporated in the presence of an activator represented by the following formula (1):

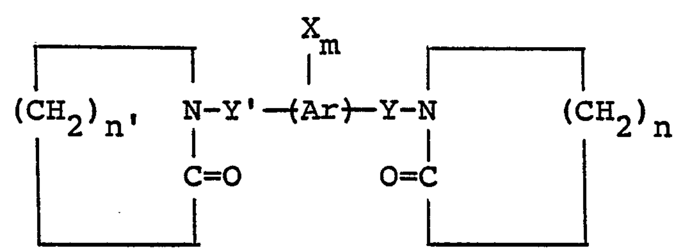 (1)

wherein Ar is a divalent aromatic residue, X is a halogen atom directly bonded to the aromatic ring, m is an integer of 1 to 6, Y and Y′ represent each an acyl group selected from

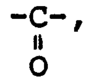 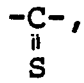 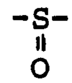 and 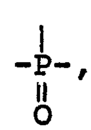

and n and n′ mean each an integer of 3 to 11.

The present invention further provides a low water-absorptive nylon RIM material wherein 30 to 90% by weight of a lactam and 70 to 10% by weight of an olefinic polyhydric alcohol of branched structure having a molecular weight of 1,000 to 10,000 are blended in the presence of an activator represented by the above formula (1) and 10 to 50% by weight in total, based on the blend, of a fibrous or flaky filler having an

average aspect ratio of 5 to 15 and a spherical filler having an average aspect ratio of 1 to 3 are mixed with the blend.

The present invention furthermore provides a process for producing a molded product using a nylon RIM material, which comprises feeding into a mixing head and mixing therein the liquid A portion of the nylon RIM material which consists of caprolactam and an alkali main catalyst, the liquid B portion of the nylon RIM material which consists of caprolactam, a rubber compound mainly composed of an olefinic polyhydric alcohol of branched structure having a molecular weight of 1,000 to 10,000 and an activator represented by the above formula (1) and the liquid C portion of the nylon RIM material which consists of caprolactam, a fibrous or flaky filler having an average aspect ratio of 5 to 15 and a spherical filler having an average aspect ratio of 1 to 3, and injecting the resulting mixture into a hybrid mold comprising a metallic skin layer and a resin backup, under pressure to produce a molded product.

In the present invention, the activator represented by the above formula (1) has an action of initiating the polymerization reaction of the nylon RIM material. The olefinic polyhydric alcohol of branched structure having a molecular weight of 1,000 to 10,000 is hydrophobic due to the molecular structure and accordingly reduces the water absorptivity of the resulting nylon RIM material. Moreover, the olefinic polyhydric alcohol is polymerized to form a network structure in the nylon RIM material, whereby the water absorptivity of the material is reduced further. The filler having an average aspect ratio of 5 to 15 reduces the number of polyamide groups in the nylon resin to make the nylon RIM material less water-absorptive and further makes the material stronger. The filler having an average aspect ratio of 1 to 3 reduces the number of polyamide groups in the nylon resin to make the nylon RIM material less water-absorptive and further improves the dimensional accuracy of a molded article produced from the RIM material. The mixing head is to mix a nylon RIM material of two-part system with fillers of slurry state. The hybrid mold is to produce a molded article of good appearance rapidly and at a low cost. The injection under pressure is to improve the dimensional accuracy of a molded article and to obtain a molded article free from air bubbles.

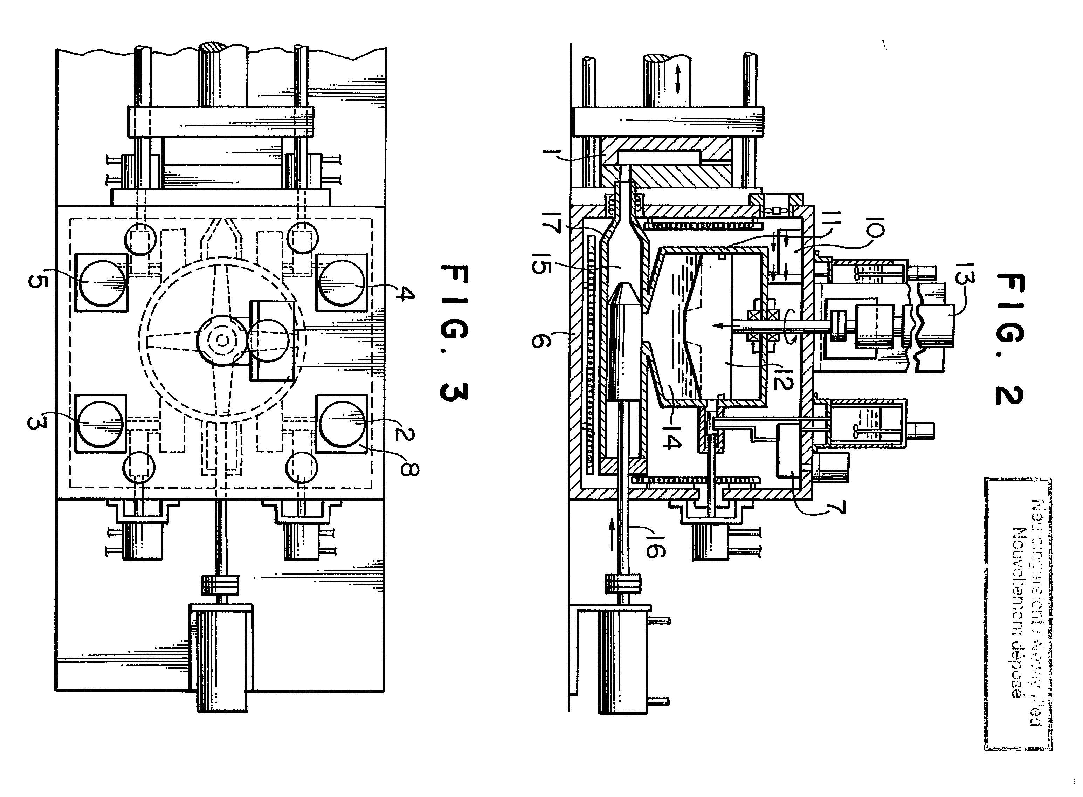

Fig. 1 is a perspective view of a master model. Fig. 2 and Fig. 3 are a sectional front view and a plan view, respectively, of an apparatus used for production of a molded product using a low water-absorptive nylon RIM material. In Figs. 2 and 3, 1 is a mold for RIM; 2 is a tank for nylon RIM material A; 3 is a tank for nylon RIM material B; 4 is a tank for caprolactam cleaning liquid; 5 is a tank for fillers of slurry state; and 6 is a unit for controlling the temperature within the apparatus.

The present invention is described in detail by referring to Examples.

Example 1

Into a flask with a stirrer were fed one equivalent of 2-chloroterephthalic acid dichloride, six equivalents of anhydrous caprolactam and pyridine as a capturing agent for hydrogen chloride. They were reacted for 2 hours at 140°C. The reaction product solution was placed in a large amount of cold water to precipitate the reaction product as a white precipitate. The precipitate was collected by filtration, thoroughly washed by pure water to remove excessive caprolactam and vaccum-dried to obtain a white powder, i.e., an activator represented by the formula (1). There was prepared a liquid A consisting of caprolactam and an alkali main catalyst. Further, there were prepared 6 kinds of liquids B (these liquids are hereinafter referred to as $B_1$, $B_2$, $B_3$, $B_4$, $B_5$ and $B_6$ for convenience's sake), each consisting of 1 % by weight of the above activator, caprolactam and, as an olefinic polyhydric alcohol of branched structure having a molecular weight of 1,000 to 10,000, a rubber compound composed mainly of a polypropylene glycol. In each liquid B, the olefinic polyhydric alcohol was used in such an amount that its content in the nylon RIM material (a mixture of the liquid A and the liquid B) became 5, 10, 30, 50, 70 or 75% by weight. The liquid A and each liquid B were mixed and dissolved in a constant temperature tank maintained at 100°C and charged into a mold of 150°C to prepare 6 test pieces different in the weight content of the rubber component. These 6 test pieces were allowed to absorb moisture in a constant temperature and constant humidity tank of 23°C and 50% relative humidity, and the time until the moisture absorption reached an equilibrium was measured for each test piece. These times are shown in Table 1 in comparison with the time of a conventional nylon RIM material (, which is a commercially available product of general-purpose type and referred to as $B_0$).

Table 1

| Kind of B | $B_0$ | $B_1$ | $B_2$ | $B_3$ | $B_4$ | $B_5$ | $B_6$ |
|---|---|---|---|---|---|---|---|
| Time up to equilibrium, hr | 767 | 1010 | 2896 | 3001 | 3652 | 3698 | 3701 |

As clear from Table 1, in the test pieces having an olefinic polyhydric alcohol content of 10 to 70% by weight (i.e. $B_2$ to $B_5$), the time until the water absorptivity reaches an equilibrium is at least 4 times that of the conventional nylon RIM material. When the olefinic polyhydric alcohol content is less than 10% by weight, the olefinic polyhydric alcohol shows little effect on the reduction in water absorption. When the content is more than 70% by weight, the polyhydric alcohol shows a high effect on the reduction but the resulting nylon RIM material has too high a viscosity and is not suitable for practical applications.

Incidentally, when the olefinic polyhydric alcohol had a molecular weight of smaller than 1,000, the resulting molded product had reduced impact resistance; meanwhile, when the alcohol component had a molecular weight of larger than 10,000, the resulting nylon RIM material had a high viscosity and was not suitable as a molding material.

Example 2

Milled fibers (F 104 manufactured by NITTO BOSEKI CO., LTD.) having an average aspect ratio of 11 and glass beads (particle sizes of 30 micrometers or below, manufactured by TOSHIBA BALLOTINI CO., LTD.) having an average aspect ratio of 1 were mixed to prepare 5 blends (these blends are hereinafter referred to as $C_1$, $C_2$, $C_3$, $C_4$ and $C_5$ for convenience's sake). The contents of the miled fillers and the glass beads in $C_1$ to $C_5$ were 50 and 10% by weight, 30 and 20% by weight, 20 and 30% by weight, 10 and 40% by weight and 5 and 45% by weight, respectively, based on the total weight of the liquid A and the liquid $B_3$ prepared in Example 1. A mixture of the liquid A, the liquid $B_3$ and each of $C_1$ -$C_5$ was charged into a mold to prepare 5 different test pieces. These test pieces were measured for water absorptivity in the same manner as in Example 1. The results are shown in Table 2.

Table 2

| Kind of C or B | $B_0$ | $C_1$ | $C_2$ | $C_3$ | $C_4$ | $C_5$ |
|---|---|---|---|---|---|---|
| Time up to equilibrium, hr | 778 | 3600 | 4521 | 4689 | 4792 | 4802 |

As clear from Table 2, in the test pieces containing fillers in an amount of 10 to 50% by weight in total (i.e. $C_2$ to $C_5$), the time until the water absorptivity reaches an equilibrium is at least about 6 times that of the conventional nylon RIM material.

Incidentally, fibrous fillers having an average aspect ratio of higher than 15 are not suitable for use in the nylon RIM material of the present invention, because such fillers have large fiber lengths and the resulting nylon RIM material has a very high viscosity, which makes the molding difficult. Fibrous fillers having an average aspect ratio of smaller than 5 have no sufficient reinforcing effect and act only as a filler in the nylon RIM material of the present invention.

Example 3

A mold 1 for reproduction of a master model M as shown in Fig. 1 was made by forming on the surfaces of a cavity and a core a skin layer of about 3 mm in thickness by the flame spraying of titanium and zinc and then backing up the layer with a filler-reinforced epoxy resin. As shown in Fig. 2, this mold 1 was then allowed to stand for 3 hours in a constant temperature tank of 150°C to heat the mold 1. Simultaneously, the liquid A, the liquid B (both used in Example 1) and caprolactam as a cleaning liquid were heated and melted with an atmosphere 6 maintained at 100°C. Then, they were placed in tanks 2, 3 and 4, respectively. Similarly, the filler $C_2$ used in Example 2 was mixed with caprolactam and the resulting slurry was placed in a tank 5. The liquid A, the liquid B and the slurry filler $C_2$ in the respective tanks were charged into a mixing head 11 by using gear pumps 7, 8 and 10, respectively. The resulting liquid mixture was stirred by a cone type mixer 12. The resulting blend 14 was pushed into the inside 15 of an injection unit 17 by the movement of the mixer 12 operated by a cylinder 13. The blend was then injected into the mold 1 for RIM by a piston 16 at an injection pressure of 1 to 2 kg/cm$^2$. In 1 to 2 minutes after the injection, the opening of the RIM mold 1 was conducted to obtain a molded product. The gate portion, flashes, etc. were removed from the molded product and then the finish treatment was conducted.

The molded product was allowed to stand for 200 hours at 23°C and 50% relative humidity and then compared with a molded product using a conventional nylon RIM material. The results are shown in Table 3.

Table 3

| | Dimensional change from original dimension, % | |
|---|---|---|
| | Conventional commercial product | Present product |
| a | 0.58 | 0.02 |
| b | 0.92 | 0.04 |
| c | 0.87 | 0.07 |

Note: Regarding a, b and c, please refer to Fig. 1.

As clear from Table 3, the molded product produced according to the present invention showed a dimensional change percent of less than 1/20 of that of the molded product produced using the conventional nylon RIM material. Moreover, the molded product according to the present invention contained less air bubbles and showed better appearance as compared with those of the conventional product.

As described above, in the nylon RIM material according to the present invention, the time until the water absorptivity reaches an equilibrium is at least several times those of conventional nylon RIM materials, and the water absorptivity is lower. Moreover, in the molded article by use of the nylon RIM material according to the present invention, the dimensional change percent due to water absorption is less than 1/10 of those in the molded articles made of the conventional nylon RIM materials; the amount of air bubbles contained is small; and the appearance is excellent.

**Claims**

1. A low water-absorptive nylon RIM material wherein 30 to 90% by weight of a lactam and 70 to 10% by weight of an olefinic polyhydric alcohol of branched structure having a molecular weight of 1,000 to 10,000 are incorporated in the presence of an activator represented by the following structural formula:

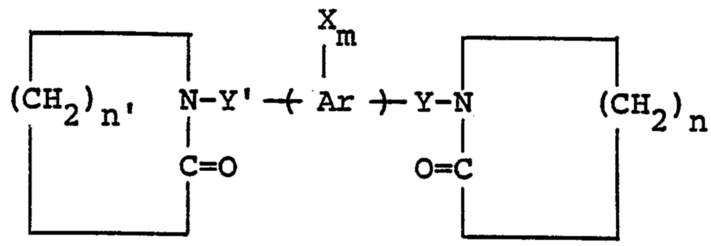

wherein Ar is a divalent aromatic residue, X is a halogen atom directly bonded to the aromatic ring, m is an integer of 1 to 6, Y and Y′ represent each an acyl group selected from

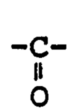, 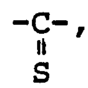, 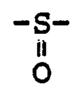 and 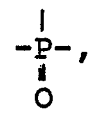,

and n and n′ mean each an integer of 3 to 11.

2. A low water-absorptive nylon RIM material wherein 30 to 90% by weight of a lactam and 70 to 10% by weight of an olefinic polyhydric alcohol of branched structure having a molecular weight of 1,000 to 10,000 are blended in the presence of an activator represented by the following structural formula:

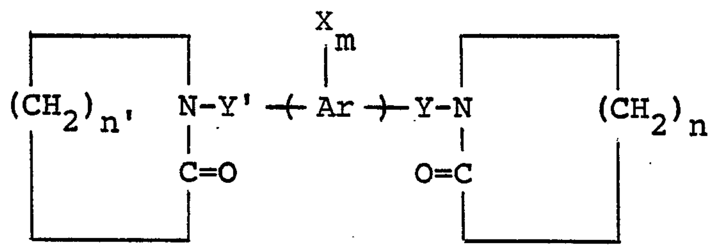

wherein Ar is a divalent aromatic residue, X is a halogen atom directly bonded to the aromatic ring, m is an integer of 1 to 6, Y and Y′ represent each an acyl group selected from

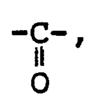, 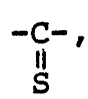, 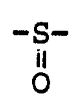 and 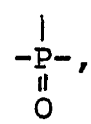,

and n and n′ mean each an integer of 3 to 11, and 10 to 50% by weight in total, based on the blend, of a fibrous or flaky filler having an average aspect ratio of 5 to 15 and a spherical filler having an average aspect ratio of 1 to 3 are mixed with the blend.

3. A process for producing a molded product using a nylon RIM material, which comprises feeding into a mixing head and mixing therein the liquid A portion of the nylon RIM material which consists of caprolactam and an alkali main catalyst, the liquid B portion of the nylon RIM material which consists of caprolactam, a rubber compound composed mainly of an olefinic polyhydric alcohol of branched structure having a molecular weight of 1,000 to 10,000 and an activator represented by the following structural formula:

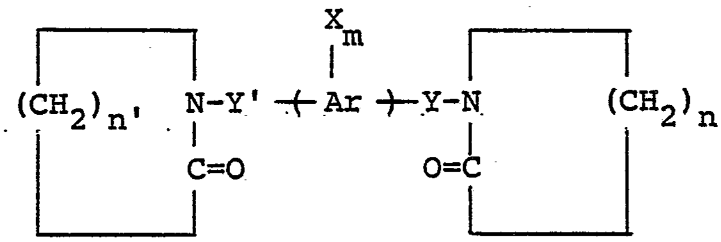

wherein Ar is a divalent aromatic residue, X is a halogen atom directly bonded to the aromatic ring, m is an integer of 1 to 6, Y and Y′ represent each an acyl group selected from

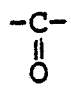, 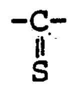, 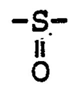 and 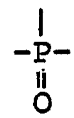,

and n and n′ mean each an integer of 3 to 11, and the liquid C portion of the nylon RIM material which consists of caprolactam, a fibrous or flaky filler having an average aspect ratio of 5 to 15 and a spherical filler having an average aspect ratio of 1 to 3, and injecting the resulting mixture into a hybrid mold comprising a metallic skin layer and a resin backup, under pressure to produce a molded product.

Neu eingereicht / Newly filed
Nouvellement déposé

FIG. 1

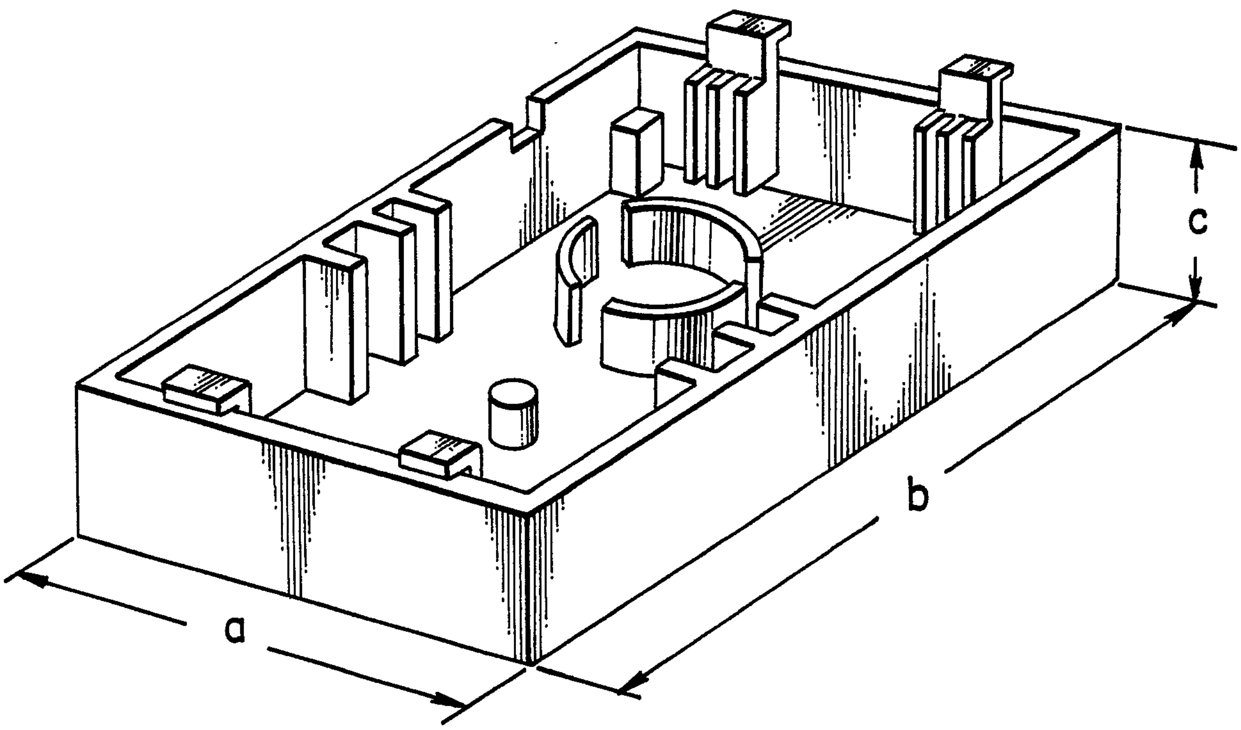

Neu eingereicht / Newly filed
Nouvellement déposé

FIG. 2

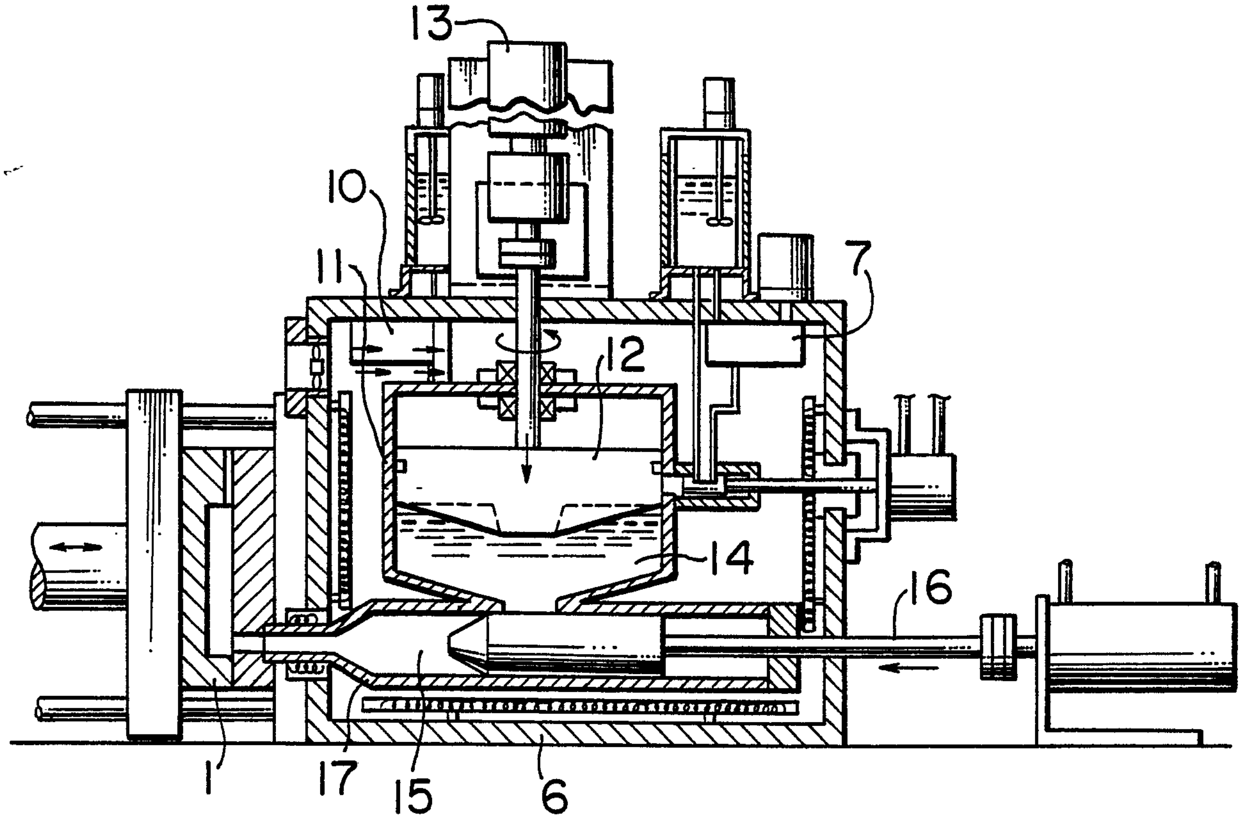


FIG. 3